# FASCICULE DE BREVET EUROPEEN

(11) **EP 4 251 578 B1**
(45) Date de publication et mention de la délivrance du brevet: **06.11.2024**
(21) Numéro de dépôt: 21835346.4
(22) Date de dépôt: 26.11.2021
(51) Int. Cl.: C03C 1/00, C03B 5/00

(54) **PROCÉDÉ DE FABRICATION D'UN ARTICLE EN VERRE À PARTIR D'UNE PORTION DE VERRE RECYCLÉ**
VERFAHREN ZUR HERSTELLUNG EINES GLASARTIKELS AUS EINEM TEIL AUS RECYCLINGGLAS
METHOD FOR PRODUCING A GLASS ARTICLE FROM A PORTION OF RECYCLED GLASS

(30) Priorité: 27.11.2020 FR 2012311; 12.03.2021 FR 2102488
(43) Date de publication de la demande: 04.10.2023
(73) Titulaire: Pochet du Courval, 92110 Clichy (FR)
(72) Inventeur: RAVEL, Patrick, 92110 Clichy (FR); DEHE, Pierre, 92110 Clichy (FR)
(74) Mandataire: Derambure Conseil
(86) Numéro de dépôt international: PCT/FR2021/052103
(87) Numéro de publication internationale: WO 2022/112721

(56) Documents cités:
- EP-A1- 0 701 976
- EP-A1- 3 252 021
- EP-A1- 3 569 577
- CN-A- 109 399 926

## Description

### Domaine technique

La présente divulgation relève du domaine de la fabrication d'articles en verre, en particulier des articles en verre moulés.

### Technique antérieure

Il est connu de fabriquer des articles de verre en introduisant dans un four verrier des matières premières vierge, du calcin interne, et du calcin externe. Ces procédés permettent de recycler une part importante de verre. Le verre étant potentiellement recyclable à l'infini, ces procédés permettent donc de diminuer les coûts de production et de limiter l'impact environnemental de la fabrication du verre.

EP 3 252 021 décrit un procédé de fabrication d'un article en verre sodo-calcique. CN 109 399 926 décrit la fourniture d'une bouteille de vin en verre colorée comme une céramique. EP 3 569 577 et EP 0 701 976 décrivent un procédé de fabrication d'un verre borosilicate.

Cependant, le verre fabriqué par ces procédés présente une teinte verdâtre qui n'est pas compatible avec une utilisation en tant que flacon pour parfum. En effet l'industrie de la parfumerie souhaite un verre blanc, incolore, transparent et brillant pour mettre en valeur la fragrance contenue dans le flacon.

Pour résoudre ce problème, EP 3 252 021 propose un procédé de fabrication du verre mettant en oeuvre une composition intermédiaire destinée à subir une fusion pour être transformée en verre blanc, ladite composition intermédiaire comprenant:
- au moins 15% en masse de calcin externe comprenant, de préférence, au moins 99,9% en masse de débris de verre blanc et mi-blanc ayant, respectivement, un taux de fer entre 200 ppm et 600 ppm et supérieure à 600 ppm,
- du calcin interne comprenant, de préférence, des débris de verre incolore et blanc ayant un taux de fer inférieur ou égal à 200 ppm (exprimé en Fe₂O₃), et
- un agent de décoloration comprenant, de préférence du cobalt et du sélénium ou de l'erbium.
Les caractéristiques optiques, en particulier la transparence, du verre fabriqué par ce procédé sont présentées comme excellentes mais, pour une utilisation en tant que flacon pour parfum, elles peuvent être encore améliorées.

Un procédé de fabrication d'un article en verre, en particulier un article en verre moulé, doit répondre à un cahier des charges rigoureux. Il doit permettre d'obtenir de manière reproductible un article en verre qui est mécaniquement résistant et qui ne présente pas de défauts d'aspects (ex : bulles d'air). Il ne doit pas générer de dérives de teinte. Il doit permettre la formation d'un article en verre, à partir de la composition verrière fondue. Différents processus physico-chimiques sont mis en oeuvre dans le procédé. Toute modification apportée au procédé risque d'altérer ces processus physico-chimiques, de sorte que le procédé ne réponde plus au cahier des charges.

### Problème technique

Il existe donc un besoin pour un procédé de fabrication, à partir de calcin externe, d'un verre blanc, incolore, transparent, brillant et compatible avec une utilisation par l'industrie de la cosmétique et de la parfumerie, ledit procédé répondant par ailleurs au cahier des charges mentionné ci-dessus.

Il est ainsi du mérite des inventeurs d'avoir trouvé qu'il était possible de répondre à ce besoin en contrôlant le taux de fer dans la portion de matières premières vierges mise en oeuvre dans la fabrication de l'article en verre.

### Résumé

Un premier aspect de l'invention est un procédé de fabrication d'un article en verre sodo-calcique, en particulier un article en verre moulé, à partir d'une composition verrière, ledit procédé comprenant :
- l'introduction de la composition verrière dans un four verrier, la composition verrière comprenant une portion de verre recyclé minéral et une portion de matières premières vierges pour verre minéral;
- la fonte de la composition verrière dans le four verrier pour obtenir un verre fondu;
- la mise en forme du verre fondu pour obtenir l'article en verre ;
caractérisé en ce que la portion de matières premières vierges pour verre minéral comprend un taux de fer inférieur ou égal à 160 ppm, de préférence inférieur ou égal à 150 ppm, 140 ppm, 130 ppm ou 120 ppm.

De façon avantageuse, le procédé de l'invention permet de fabriquer, à partir de calcin externe, un article en verre qui soit blanc, incolore, transparent, brillant et qui soit compatible avec une utilisation, par exemple, en tant que flacon pour parfum ou pot pour un produit cosmétique.

Sans être liés par aucune théorie, les inventeurs sont d'avis que la valeur maximale du taux de fer de la portion de matières premières vierges indiquée ci-dessus permet de maintenir un taux de fer dans l'article en verre fabriqué inférieure à 250 ppm, valeur limite au-dessus de laquelle les inventeurs ont noté qu'apparait la teinte verdâtre du verre.

De manière inattendue, les inventeurs ont également observé que ce choix particulier de matière première vierge ne perturbe pas le procédé, notamment l'étape de formage ou les dérives de teinte, et n'entraîne pas d'altérations dans le produit final, comme les défauts d'aspect ou une faible résistance mécanique du flacon.

En outre, par rapport à un procédé mettant en oeuvre uniquement des matières premières vierges sans verre recyclé, le procédé de l'invention présente une empreinte carbone plus faible car il permet de consommer moins de ressources minérales et est avantageusement moins énergivore. En effet la fusion de la portion de verre recyclé est moins énergivore et moins émettrice de CO₂ que la fusion de la portion des matières premières vierges. Typiquement, le gain énergétique est de 2,5% par tranche de 10% de portion de verre recyclé minéral, le gain de CO₂ est de 580 kg par tonne de portion de verre recyclé minéral et le gain en matières premières vierges est de 1,2 tonne par tonne de portion de verre recyclé minéral.

Le procédé de l'invention a donc un impact environnement réduit, *i.e.* il contribue à limiter l'épuisement des ressources minérales, à réduire l'impact carbone de l'article en verre fabriqué et est engagé dans l'économie circulaire via une valorisation des déchets.

Le procédé de l'invention participe avantageusement à l'économie circulaire car il permet de valoriser tous types de verre, par exemple :
- le verre dit ménager déposé par les habitants dans les conteneurs situés à proximité de leur domicile, ou enlevés par un service de collecte spécifique en porte-à-porte,
- le verre issu des cafés, hôtels et restaurants collecté grâce aux conteneurs spécifiques appelés tonnelets,
- le verre dit « creux industriel » ou flaconnage provenant de rebuts industriels des producteurs verriers, embouteilleurs et distributeurs.

Plus particulièrement le procédé de l'invention permet de valoriser un déchet spécifique au flaconnage non pollué et de recycler du verre blanc premium qui aurait été moins valorisé dans le filière de recyclage classique.

Selon un autre aspect, il est proposé une composition verrière pour la fabrication d'un article en verre sodo-calcique, en particulier un article en verre moulé, comprenant une portion de verre recyclé minéral et une portion de matières premières vierges pour verre minéral, caractérisée en ce que la portion de matières premières vierges pour verre minéral comprend un taux de fer inférieur à 160 ppm, de préférence inférieur ou égal à 150 ppm, 140 ppm, 130 ppm ou 120 ppm.

Selon un autre aspect, il est proposé un article en verre sodo-calcique, en particulier un article en verre moulé, susceptible d'être fabriqué selon le procédé selon l'invention, caractérisé en ce qu'il comprend un taux de fer inférieur à 190 ppm.

### Brève description des dessins

D'autres caractéristiques, détails et avantages apparaîtront à la lecture de la description détaillée ci-après, et à l'analyse des dessins annexés, sur lesquels :
**Fig. 1**

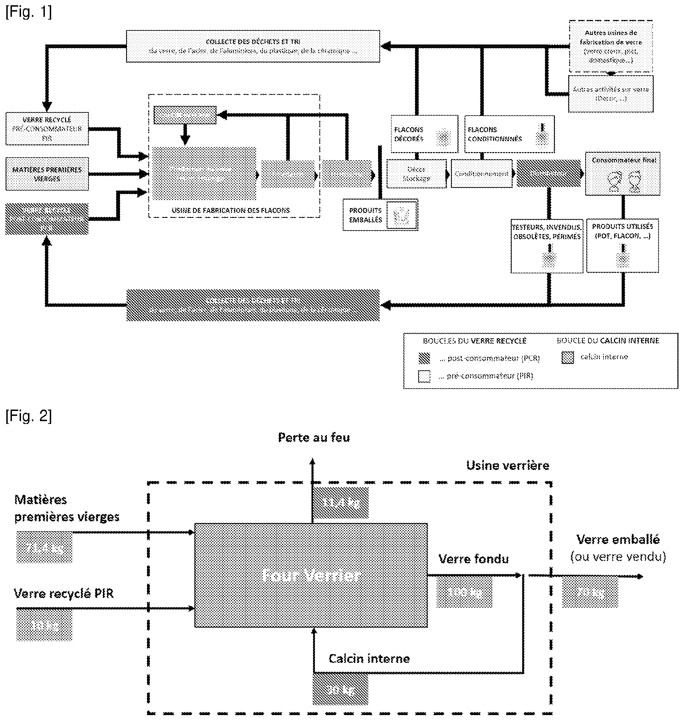

   [Fig. 1] représente les boucles du verre recyclé minéral et la boucle du calcin interne.
**Fig. 2**
   [Fig. 2] représente de manière schématique un procédé de fabrication d'un article en verre mettant en oeuvre la composition verrière 1 selon l'invention.
**Fig. 3**

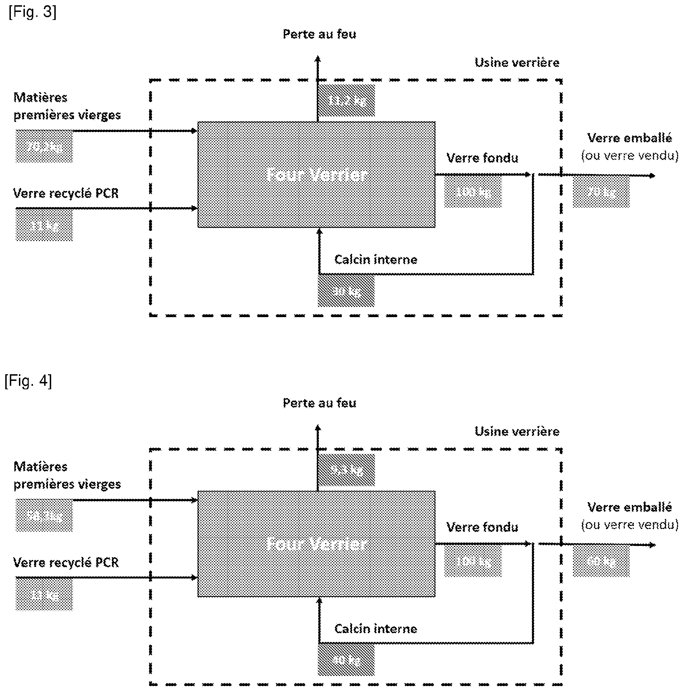

   [Fig. 3] représente de manière schématique un procédé de fabrication d'un article en verre mettant en oeuvre la composition verrière 2 selon l'invention.
**Fig. 4**
   [Fig. 4] représente de manière schématique un procédé de fabrication d'un article en verre mettant en oeuvre la composition verrière 3 selon l'invention.

### Description des modes de réalisation

Un premier aspect de l'invention est un procédé de fabrication d'un article en verre sodo-calcique, en particulier un article en verre moulé, à partir d'une composition verrière, ledit procédé comprenant :
- l'introduction de la composition verrière dans un four verrier, la composition verrière comprenant une portion de verre recyclé minéral et une portion de matières premières vierges pour verre minéral;
- la fonte de la composition verrière dans le four verrier pour obtenir un verre fondu;
- la mise en forme du verre fondu pour obtenir l'article en verre ;
caractérisé en ce que la portion de matières premières vierges pour verre minéral comprend un taux de fer inférieur ou égal à 160 ppm, de préférence inférieur ou égal à 150 ppm, 140 ppm, 130 ppm ou 120 ppm.

Sauf mention contraire, il est fait référence à des ppm (partie par million) en poids.

Au sens de la présente demande, "composition verrière" désigne un mélange solide, pulvérulent et vitrifiable entrant dans la composition d'un article en verre et destiné à être porté à sa température de fusion pour faire passer ledit mélange de l'état pulvérulent à un état liquide en vue de la fabrication de l'article en verre.

Au sens de la présente demande, "article en verre moulé" désigne un article en verre fabriqué par soufflage, pressage ou une combinaison de ces deux techniques et à l'aide d'un moule. Par exemple l'article en verre moulé peut être creux tel qu'un récipient ou plein tel qu'un bouchon ou un cabochon. Typiquement le récipient peut présenter un col étroit tel qu'un flacon, une bouteille, une ampoule, une carafe ou une bonbonne. Le récipient peut alternativement présenter un col large tel qu'un pot ou un bocal. Selon un mode réalisation, le récipient peut être un flacon pour parfum ou un pot pour un produit cosmétique.

Au sens de la présente demande, "matières premières vierges" désigne les matières qui sont la base du verre sodo-calcique. Typiquement ces matières peuvent être choisies parmi la silice, le carbonate de sodium, le carbonate de calcium (aussi appelé calcaire), le carbonate de baryum, l'alumine hydratée, le sulfate de sodium et leurs mélanges, en particulier leurs mélanges.

Typiquement, la part des matières premières vierges dans la composition verrière peut être comprise entre 30% et 80% en poids, en particulier entre 40% et 75% en poids, plus particulièrement entre 55% et 75% en poids, entre 65% et 75% en poids ou entre 40% et 65% en poids. Elle peut, par exemple, être égale à 40%, 45%, 50%, 53%, 55%, 58%, 60%, 65%, 70%, 71%, 72% ou 75% en poids.

En contrôlant le taux de fer de la portion de matières premières végétales, le procédé de l'invention permet de fabriquer un article en verre comprenant jusqu'à 50% de verre recyclé minéral sans avoir à réaliser les étapes longues et compliquées de tri et de sélection du verre recyclé minéral en fonction de son taux de fer.

Au sens de la présente demande, "verre recyclé minéral" désigne le calcin externe, *i.e.* du verre usagé typiquement collecté, en vue de son recyclage, par le biais de filières de collecte. La portion de verre recyclé minéral peut comprendre du verre recyclé minéral post-consommateur, du verre recyclé minéral pré-consommateur ou leur mélange. Le verre recyclé minéral ne comprend pas le calcin interne tel que défini ci-dessous.

Selon un mode de réalisation, la portion de verre recyclé minéral peut comprendre du verre de bouteille recyclé post-consommateur, du verre de bouteille recyclé pré-consommateur ou leur mélange.

Selon un mode de réalisation, la portion de verre recyclé minéral peut comprendre du verre de flacon recyclé post-consommateur, du verre de flacon recyclé pré-consommateur ou leur mélange.

Au sens de la présente demande, "verre recyclé minéral post-consommateur" désigne le calcin externe généré par l'utilisateur final du produit incluant la chaine de distribution en accord avec la norme ISO 14021 (juillet 2016).

Au sens de la présente demande, "verre recyclé minéral pré-consommateur" désigne, en accord avec la norme ISO 14021 (juillet 2016), le verre ou calcin détourné du flux de déchet pendant une étape de fabrication tel que l'étape de décor ou l'étape de conditionnement. Est exclu la réutilisation de verre ou calcin tel que ceux issus du retraitement du rebroyage, ou les résidus générés pendant un procédé donné et pouvant être récupérés (pour valorisation) au sein de ce même procédé qui les a générés.

Indépendamment l'un de l'autre, le verre recyclé minéral post-consommateur et le verre recyclé minéral pré-consommateur peuvent notamment être du verre sodocalcique tel que du verre d'un article en verre moulé tel que défini ci-dessus, du verre de panneau solaire, du verre ménager, du verre automobile ou leurs mélanges, en particulier du verre moulé.

Typiquement, la part de verre recyclé minéral dans la composition verrière peut être comprise entre 5% et 35% en poids, en particulier entre 5% et 20% en poids, plus particulièrement entre 7% et 20% en poids. Elle peut, par exemple, être égale à 5%, 6%, 7%, 8%, 9%, 10%, 11%, 12%, 13%, 14%, 15%, 16%, 17%, 18%, 19% ou 20% en poids.

Selon un premier mode de réalisation très particulier, la part de verre recyclé minéral dans la composition verrière peut être comprise entre 8% et 10,5% en poids.

Selon un second mode de réalisation très particulier, la part de verre recyclé minéral dans la composition verrière peut être comprise entre 10,5% et 20% en poids.

Le taux de fer de la portion de verre recyclé minéral peut, par exemple, être inférieur ou égal à 600 ppm, de préférence inférieur ou égal à 550 ppm, 500 ppm, 450 ppm ou 400 ppm.

Dans la présente demande, le taux de fer est exprimé en Fe₂O₃. Le taux de fer de la portion de matières premières vierges et le taux de fer de la portion de verre recyclé minéral peuvent être déterminés par spectroscopie par fluorescence aux rayons X. La spectroscopie par fluorescence aux rayons X est une méthode d'analyse connue de l'homme du métier, il saura l'adapter pour déterminer le taux de fer de la portion de matières premières vierges et le taux de fer de la portion de verre recyclé minéral. Typiquement cette méthode d'analyse peut être réalisée sur un échantillon de chaque élément de la portion de verre recyclé minéral pris séparément, sur un échantillon d'un mélange d'éléments de la portion de verre recyclé minéral ou sur au moins un élément pris séparément et sur un mélange des autres éléments de la portion de verre recyclé. Cette méthode d'analyse est également typiquement réalisée sur un échantillon de chaque matière de la portion de matières premières vierges, sur un échantillon d'un mélange de matières de la portion de matières premières vierges, ou sur au moins une matière prise séparément et sur un mélange des autres matières de la portion de matières premières vierges, en particulier sur un échantillon de chaque matière de la portion de matières premières vierges.

De façon avantageuse, avoir un taux de fer de la portion de matières premières vierges et un taux de fer de la portion de verre recyclé minéral dans les plages de valeur mentionnées ci-dessus permet de fabriquer un article en verre dont la transparence est compatible avec une utilisation en tant que flacon pour parfum. De plus cela permet avantageusement d'éviter des pollutions.

En outre, avoir un taux de fer de la portion de verre recyclé minéral dans les plages de valeur mentionnées ci-dessus et/ou une part de verre recyclé minéral dans les plages de valeur mentionnées ci-dessus facilite avantageusement le maintien du taux de fer dans l'article en verre inférieur à une valeur inférieure à 250 ppm, valeur limite au-dessus de laquelle les inventeurs ont noté qu'apparait la teinte verdâtre du verre.

Au cours de l'étape d'introduction, le taux recyclé introduit dans le four verrier peut être compris entre 5% et 35% en poids, en particulier entre 8% et 25% en poids, plus particulièrement entre 8% et 21% en poids.

Selon un premier mode de réalisation très particulier, le taux recycle introduit dans la composition verrière peut être comprise entre 10% et 15% en poids.

Selon un second mode de réalisation très particulier, le taux recyclé introduit dans le four verrier peut être compris entre 15% et 25% en poids.

Au sens de la présente demande, "taux recyclé introduit" désigne le rapport entre la masse de la portion de verre recyclé minéral de la composition verrière et la masse de verre fondu obtenu lors de l'étape de fonte.

De façon avantageuse, avoir un taux recyclé introduit dans les plages ci-dessous permet de faciliter le maintien du taux de fer dans l'article en verre inférieur à la valeur de 250 ppm, valeur limite au-dessus de laquelle les inventeurs ont noté qu'apparaissait la teinte verdâtre du verre.

La composition verrière peut en outre comprendre du calcin interne.

Au sens de la présente demande, "calcin interne" désigne les rebuts générés par un procédé de fabrication d'articles en verre, en particulier article en verre moulé, mis en oeuvre sur le même site industriel, lesdits articles en verre pouvant présenter un défaut d'aspect, des bulles d'air, une teinte colorée et/ou une fragilité mécanique.

De façon avantageuse, la mise en oeuvre du calcin interne permet d'augmenter la teneur en verre recyclé, et donc de diminuer la teneur en matières premières vierges, dans la composition verrière de l'invention. Ainsi la consommation en ressource minérale par le procédé de l'invention est réduite.

La part de calcin interne dans la composition verrière peut être comprise entre 20% et 50% en poids, en particulier entre 25% et 50% en poids, plus particulièrement entre 25% et 40% en poids, plus particulièrement encore entre 26% et 37% en poids. Elle peut, par exemple, être égale à 20%, 25%, 26%, 30%, 35%, 37%, 40%, 45% ou 50% en poids.

Selon un premier mode de réalisation particulier :
la part de verre recyclé minéral dans la composition verrière peut être comprise entre 5% et 35% en poids, en particulier entre 7% et 15% en poids, plus particulièrement entre 8% et 10,5% en poids,
la part de calcin interne dans la composition verrière peut être comprise entre 25% et 50% en poids, en particulier entre 25% et 40% en poids, plus particulièrement entre 26% et 37% en poids, et
la somme des deux parts peut être comprise entre 20% et 70% en poids, en particulier entre 30% et 55% en poids, plus particulièrement entre 35% et 47% en poids.

Selon un premier mode de réalisation très particulier :
la part des matières premières vierges dans la composition verrière peut être comprise entre 30% et 80% en poids, en particulier entre 40% et 75% en poids, plus particulièrement entre 40% et 65% en poids,
la part de verre recyclé minéral dans la composition verrière peut être comprise entre 5% et 35% en poids, en particulier entre 7% et 15% en poids, plus particulièrement entre 8% et 10,5% en poids,
la part de calcin interne dans la composition verrière peut être comprise entre 25% et 50% en poids, en particulier entre 25% et 40% en poids, plus particulièrement entre 26% et 37% en poids, et
la somme de la part de verre recyclé minéral et de la part de calcin interne peut être comprise entre 20% et 70% en poids, en particulier entre 30% et 55% en poids, plus particulièrement entre 35% et 47% en poids.

Selon un second mode de réalisation particulier :
la part de verre recyclé minéral dans la composition verrière peut être comprise entre 5% et 35% en poids, en particulier entre 5% et 20% en poids, plus particulièrement entre 10,5% et 20% en poids,
la part de calcin interne dans la composition verrière peut être comprise entre 25% et 50% en poids, en particulier entre 25% et 40% en poids, plus particulièrement entre 26% et 37% en poids, et
la somme des deux parts peut être comprise entre 20% et 70% en poids, en particulier entre 30% et 55% en poids, plus particulièrement entre 35% et 47% en poids.

Selon un second mode de réalisation très particulier :
la part des matières premières vierges dans la composition verrière peut être comprise entre 30% et 80% en poids, en particulier entre 40% et 75% en poids, plus particulièrement entre 40% et 65% en poids,
la part de verre recyclé minéral dans la composition verrière peut être comprise entre 5% et 35% en poids, en particulier entre 5% et 20% en poids, plus particulièrement entre la part de verre recyclé minéral dans la composition verrière peut être comprise entre 10,5% et 20% en poids,
la part de calcin interne dans la composition verrière peut être comprise entre 25% et 50% en poids, en particulier entre 25% et 40% en poids, plus particulièrement entre 26% et 37% en poids, et
la somme de la part de verre recyclé minéral et de la part de calcin interne peut être comprise entre 20% et 70% en poids, en particulier entre 30% et 55% en poids, plus particulièrement entre 35% et 47% en poids.

La composition verrière peut comprendre en outre un agent de décoloration.

Au sens de la présente demande, "agent de décoloration" désigne un agent pulvérulent qui modifie les propriétés optiques du verre, en particulier sa teinte dans des conditions d'éclairage et d'observation données.

L'agent de décoloration peut être choisi parmi l'oxyde de cobalt, l'oxyde de cérium, l'oxyde d'erbium, l'oxyde de néodyme, l'oxyde de sélénium et leurs mélanges, en particulier l'oxyde de cérium, l'oxyde d'erbium, l'oxyde de néodyme et leurs mélanges, plus particulièrement être un mélange d'oxyde de cérium, d'oxyde d'erbium et éventuellement d'oxyde de néodyme.

De façon avantageuse, l'oxyde de cérium facilite la fabrication d'un article en verre le plus incolore possible en oxydant le fer présent dans la composition verrière à son plus haut niveau d'oxydation. L'oxyde d'erbium, l'oxyde de sélénium et l'oxyde de néodyme permettent avantageusement d'éviter que le verre ne présente une teinte rosâtre.

Selon un mode de réalisation spécifique, l'agent de décoloration est dépourvu d'oxyde cobalt, d'oxyde de sélénium ou les deux. En effet, l'oxyde de sélénium peut être instable dans les conditions opératoires de l'étape de fonte dans le four verrier et donner à l'article en verre une teinte jaune non désirée.

La composition verrière peut comprendre, par rapport à la portion de matières premières vierges, entre 500 ppm et 3000 ppm d'agent de décoloration.

L'étape d'introduction de la composition verrière dans le four verrier du procédé de l'invention peut être réalisée par toutes techniques connues de l'homme du métier comme, par exemple, à l'aide d'une trémie d'enfournement.

Le four verrier peut être tout type de four capable de réaliser l'étape de fonte du procédé de l'invention, *i.e.* de porter la composition verrière à sa température de fusion pour obtenir le verre fondu.

Selon un mode de réalisation, le four verrier peut être un four continu, comme par exemple un four à bassin alimenté en continu en composition verrière en amont de sorte à obtenir en aval de manière continue le verre fondu.

L'étape de mise en forme du verre fondu pour obtenir l'article en verre peut, par exemple, être réalisée par tout procédé verrier classique utilisant un moule tel que le soufflage, le pressage et leur combinaison.

Le verre fondu obtenu à l'issue de l'étape de fonte peut ne pas présenter les caractéristiques adéquates lui permettant de subir l'étape de mise en forme. Dans le procédé selon l'invention, le verre fondu qui ne présente pas les caractéristiques adéquates pour subir l'étape de mise en forme peut être recyclé en tant que calcin interne. De façon avantageuse, cela permet de valoriser un déchet du procédé de l'invention. Cela permet également de maintenir le taux de fer de l'article en verre fabriqué en dessous de 250 ppm, valeur limite au-dessus de laquelle les inventeurs ont noté qu'apparaissait la teinte verdâtre du verre.

Ainsi, selon un mode de réalisation, une partie du verre fondu obtenu à l'issu de l'étape de fonte peut subir une étape de recyclage en tant que calcin interne de la composition verrière. Par exemple, moins de 50% en poids, en particulier de 30% à 40% en poids, de verre fondu obtenu à l'issu de l'étape de fonte peut subir cette étape de recyclage.

Un aspect de l'invention est une composition verrière pour la fabrication d'un article en verre sodo-calcique, en particulier un article en verre moulé, comprenant une portion de verre recyclé minéral et une portion de matières premières vierges pour verre minéral, caractérisée en ce que la portion de matières premières vierges pour verre minéral comprend un taux de fer inférieur à 160 ppm, de préférence inférieur ou égal à 150 ppm, 140 ppm, 130 ppm ou 120 ppm.

La composition verrière de cet aspect de l'invention est telle que décrite ci-dessus en lien avec le procédé de l'invention.

Le procédé de l'invention permet de fabriquer un article en verre.

Un autre aspect de l'invention est donc un article en verre sodo-calcique, en particulier un article en verre moulé, susceptible d'être fabriqué selon le procédé de l'invention, caractérisé en ce qu'il comprend un taux de fer inférieur à 190 ppm.

L'article en verre est réalisé en un verre sodo-calcique.

L'article en verre peut comprendre un taux de verre recyclé contenu est inférieur à 50% en poids, en particulier compris entre 10% et 30% poids. Par exemple, le taux de verre recyclé contenu peut être égal à 10%, 11%, 12%, 13%, 14%, 15%, 16%, 17%, 18%, 19%, 20% en poids. Au sens de la présente demande, "taux de verre recyclé contenu" désigne le rapport entre la masse de la portion de verre recyclé minéral de l'article de verre et la masse de verre fabriqué par le procédé de l'invention qui sera emballé.

L'article en verre peut en outre comprendre un taux de verre recyclé PCR contenu est inférieur à 40% en poids, en particulier compris entre 10% et 30% en poids. Par exemple le taux de verre recyclé PCR contenu peut être égal à 10%, 11%, 12%, 13%, 14%, 15%, 16%, 17%, 18%, 19%, 20% en poids. Au sens de la présente demande, "taux de verre recyclé PCR contenu" désigne le rapport entre la masse de la portion de verre recyclé minéral post-consommateur de l'article de verre et la masse d'article en verre fabriqué par le procédé de l'invention qui sera emballé.

Avec un taux de fer inférieur à 190 ppm, l'article en verre selon l'invention est avantageusement compatible avec une utilisation par l'industrie de la cosmétique et de la parfumerie. En particulier l'article de verre est blanc, incolore et transparent. Il peut en outre être brillant.

L'article en verre selon l'invention peut présenter une forme simple ou complexe.

Typiquement l'article en verre est un article en verre moulé tel que défini ci-dessus.

### Exemples

### Exemple 1 : Fabrication d'articles en verre selon l'invention

Des articles en verre sont fabriqués à partir des quatre compositions verrières selon l'invention indiquées dans le Tableau 1.
Le verre recyclé est du calcin externe comprenant plus de 99,9% en poids en verre de flaconnage extra blanc ou du calcin externe comprenant un taux de fer de 500 ppm.

Les matières premières vierges comprennent du sable humide, du carbonate de sodium, du calcaire, de l'alumine hydratée, du carbonate de baryum, du sulfate de sodium. Leur taux de fer est de 130 ppm.

Le calcin interne est dédié à un four, *i.e.* il provient du four dans lequel la composition verrière est fondue.

**[Tableau 1]**

| Eléments introduits dans le four | Composition verrière 1 | Composition verrière 2 | Composition verrière 3 | Composition verrière 4 |
|---|---|---|---|---|
| Verre recyclé | 8,98% (10 kg) | 9,89% (11 kg) | 10,06% (11 kg) | 19,21% (21 kg) |
| Calcin interne | 26,93% (30 kg) | 26,98% (30 kg) | 36,60% (40 kg) | 27,45% (30 kg) |
| Matières premières vierges | 64,09% (71,4 kg) | 63,13% (70,2 kg) | 53,34% (58,3 kg) | 53,34% (58,3 kg) |
| Agent de décoloration | 1500 ppm | 1700 ppm | 2000 ppm | 3000 ppm |
| % en poids calculé par rapport à la masse totale introduite dans le four ppm en poids exprimé par rapport aux matières premières vierges | | | | |

Sur les 100 kg de verre fondu obtenu par la composition verrière 1, 30 kg sont réutilisé en tant que calcin interne et 70 kg sont mis en forme. L'article en verre fabriqué à partir de la composition verrière 1 présente un taux de verre recyclé contenu de 14% et un taux recyclé introduit de 10%.

De plus, la composition verrière 1 permet un gain de 10% de matières vierges et un gain 3,3% d'empreinte carbone par rapport à du verre classique.

Sur les 100 kg de verre fondu obtenu par la composition verrière 2, 30 kg sont réutilisé en tant que calcin interne et 70 kg sont mis en forme. L'article en verre fabriqué à partir de la composition verrière 2 présente un taux de fer de 192 ppm, un taux de verre recyclé contenu de 15%, un taux de verre recyclé PCR de 15% et un taux recyclé introduit de 11%.

De plus, la composition verrière 2 permet un gain de 11% de matières première vierges, un gain 3% d'empreinte carbone par rapport à du verre classique (580 kg de CO2 pour une tonne de matières premières vierges évitées) et un gain de 2,5% d'énergie pour 10% de matières premières vierges évitées.

Sur les 100 kg de verre fondu obtenu par la composition verrière 3, 40 kg sont réutilisé en tant que calcin interne et 60 kg sont mis en forme. L'article en verre fabriqué à partir de la composition verrière 3 présente un taux de fer de 199 ppm, un taux de verre recyclé contenu de 18%, un taux de verre recyclé PCR de 18% et un taux recyclé introduit de 11%.

Sur les 100 kg de verre fondu obtenu par la composition verrière 4, 30 kg sont réutilisé en tant que calcin interne et 70 kg sont mis en forme. L'article en verre fabriqué à partir de la composition verrière 4 présente un taux de verre recyclé contenu de 30%, un taux de verre recyclé PCR de 30% et un taux recyclé introduit de 21%.

Tous les articles en verres fabriqués à partir des compositions verrières selon l'invention comprennent une teneur en matériau recyclé (verre recyclé et calcin interne) élevé comprise entre 35% et 47% en poids.

De plus, tous les articles en verre fabriqués à partir des compositions verrières selon l'invention présentent un taux de fer inférieur à 250 ppm. Ils présentent donc des caractéristiques optiques et colorimétriques remarquables (transparence et brillance), comme mis en évidence dans les Exemples 2 et 3 .

En outre, les compositions verrières selon l'invention permettent une mise en forme complexe des articles en verre et une marche en continu du four.

### Exemple 2 : Caractéristiques optiques d'un article en verre obtenu à partir de la composition verrière 1.

La transmission et l'absorption normée dans le visible (longueur d'onde comprise entre 380 nm et 780 mn) d'une lamelle en verre de 2,4 mm d'épaisseur obtenue à partir de la composition verrière 1 sont évaluées.

L'absorption normée est également comparée à l'absorption normée d'une lamelle en verre obtenue à partir d'une composition verrière de l'art antérieur couramment utilisée pour la fabrication de flacon de parfum.

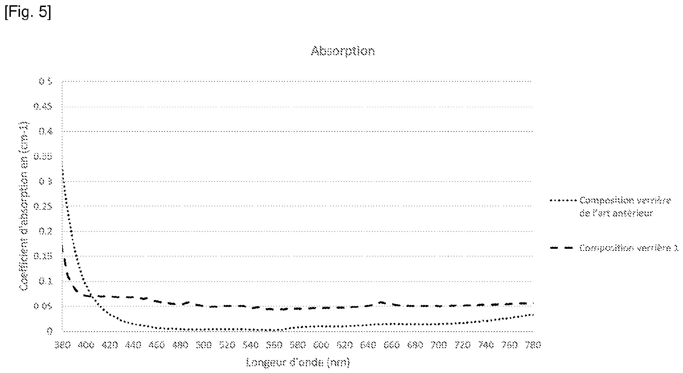

La Figure 5 illustre les spectres d'absorption normée dans le visible de la lamelle en verre obtenue à partir de la composition verrière 1 et de la lamelle en verre obtenue à partir de la composition verrière de l'art antérieur.

La transmission dans le visible de la lamelle en verre obtenue à partir de la composition verrière 1 est supérieure à 90% et la moyenne est de 91%. Cette transmission est donc très élevée.

Comme mis en évidence par la Figure 5, la lamelle en verre obtenue à partir de la composition verrière 1 est blanche et transparente dans le visible. En effet, le coefficient d'absorption de la lamelle en verre est considéré, dans le domaine de la présente invention, comme nul sur l'ensemble de la gamme de longueurs d'onde du visible.

La lamelle en verre obtenue à partir de la composition verrière de l'art antérieur est, en revanche, très légèrement jaune car la lamelle absorbe très légèrement dans le bleu (longueur d'onde comprise entre 380 nm et 420 nm).

La Figure 6 met donc en évidence que les propriétés optiques du verre de la lamelle obtenue à partir de la composition verrière 1 sont meilleures que les propriétés optiques du verre de la lamelle obtenue à partir de la composition verrière de l'art antérieur, ces dernières étant néanmoins considérées comme satisfaisantes pour produire un flacon de parfum.

L'Exemple 2 met donc en évidence que la composition verrière 1 permet de produire un article en verre adapté à une utilisation par l'industrie de la cosmétique et de la parfumerie car il présente une transmission très élevée, est blanc et transparent.

### Exemple 3 : Caractéristiques optiques d'un article en verre obtenu à partir de la composition verrière 2.

Les caractéristiques optiques et colorimétriques de différentes lamelles en verre de 10 mm d'épaisseur obtenues après fusion en four continu de la composition verrière 2 ont été évaluées dans l'espace colorimétrique Lab de Hunter. Les résultats sont présentés dans le Tableau 2 ci-dessous.

**[Tableau 2]**

| Echantillon | L | A | B |
|---|---|---|---|
| 1 | 96,1 | 0,06 | 0,08 |
| 2 | 96,4 | 0,08 | 0,01 |
| 3 | 96,5 | 0,07 | 0,06 |
| 4 | 96,0 | -0,05 | 0,08 |
| 5 | 96,3 | 0,02 | 0,06 |
| 6 | 96,3 | 0,05 | 0,06 |
| 7 | 96,4 | 0,02 | 0,05 |
| 8 | 95,9 | -0,06 | -0,06 |
| 9 | 96,3 | 0,04 | 0,08 |
| 10 | 95,7 | 0,01 | 0,16 |
| 11 | 96,2 | 0,02 | 0,07 |
| 12 | 96,1 | 0,07 | 0,11 |

Le tableau 2 met en évidence que la composition verrière 2 permet de fabriquer un verre blanc qui présente :
- une transmission lumineuse dans le visible très élevée et reproductible, et
- des coordonnées (a, b) telles que -0,06 ≤ a ≤ 0,08 et 0,01≤ b 0,16.

L'Exemple 3 met donc en évidence que l'article en verre produit à partir de la composition verrière 2 est adapté à une utilisation par l'industrie de la cosmétique et de la parfumerie car il présente les caractéristiques optiques et colorimétriques supérieures aux caractéristiques d'un verre blanc classiquement utilisé par l'industrie de la cosmétique et de la parfumerie.

## Revendications

1. Procédé de fabrication d'un article en verre sodo-calcique à partir d'une composition verrière, ledit procédé comprenant :
- l'introduction de la composition verrière dans un four verrier, la composition verrière comprenant une portion de verre recyclé minéral et une portion de matières premières vierges pour verre minéral;
- la fonte de la composition verrière dans le four verrier pour obtenir un verre fondu;
- la mise en forme du verre fondu pour obtenir l'article en verre ;
**caractérisé en ce que** la portion de matières premières vierges pour verre minéral comprend un taux de fer inférieur ou égal à 160 ppm.

2. Procédé selon la revendication 1, **caractérisé en ce que** la portion de verre recyclé minéral comprend du verre recyclé post-consommateur, du verre recyclé pré-consommateur ou leur mélange.

3. Procédé selon la revendication 1 ou la revendication 2, **caractérisé en ce que** la part des matières premières vierges dans la composition verrière est comprise entre 30% et 80% en poids.

4. Procédé selon l'une quelconque des revendications 1 à 3, **caractérisé en ce que** la part de verre recyclé minéral dans la composition verrière est comprise entre 5% et 35% en poids.

5. Procédé selon l'une quelconque des revendications 1 à 4, **caractérisé en ce que** le taux recyclé introduit dans le four verrier est compris entre 5% et 35% en poids.

6. Procédé selon l'une quelconque des revendications 1 à 5, **caractérisé en ce que** la composition verrière comprend en outre du calcin interne.

7. Procédé selon l'une quelconque des revendications 1 à 6, **caractérisé en ce que** la part de calcin interne dans la composition verrière est comprise entre 20% et 50% en poids.

8. Procédé selon l'une quelconques des revendications 1 à 7, **caractérisé en ce que** la composition comprend en outre un agent de décoloration, notamment choisi parmi l'oxyde de cobalt, l'oxyde de cérium, l'oxyde d'erbium, l'oxyde de néodyme, l'oxyde de sélénium et leurs mélanges.

9. Procédé selon la revendication 8 dans lequel la composition comprend, par rapport à la portion de matières premières vierge, entre 500 ppm et 3000 ppm d'agent de décoloration.

10. Composition verrière pour la fabrication d'un article en verre sodo-calcique comprenant une portion de verre recyclé minéral et une portion de matières premières vierges pour verre minéral, **caractérisée en ce que** la portion de matières premières vierges pour verre minéral comprend un taux de fer inférieur à 160 ppm.

11. Composition selon la revendication 10, **caractérisé en ce que** la portion de verre recyclé minéral comprend du verre recyclé post-consommateur, du verre recyclé pré-consommateur ou leur mélange.

12. Composition selon les revendications 10 ou 11, **caractérisé en ce que** la part des matières premières vierges dans la composition verrière est comprise entre 30% et 80% en poids.

13. Composition selon l'une quelconque des revendications 10 à 12, **caractérisé en ce que** la part de verre recyclé minéral dans la composition verrière est comprise entre 5% et 35% en poids.

14. Composition selon l'une quelconque des revendications 10 à 13, **caractérisé en ce qu'**elle comprend en outre du calcin interne.

15. Composition selon l'une quelconque des revendications 10 à 14, **caractérisé en ce que** la part de calcin interne dans la composition verrière est comprise entre 20% et 50% en poids.

16. Composition selon l'une quelconques des revendications 10 à 15, **caractérisé en ce qu'**elle comprend en outre un agent de décoloration, choisi notamment parmi l'oxyde de cobalt, l'oxyde de cérium, l'oxyde d'erbium, l'oxyde de néodyme, l'oxyde de sélénium et leurs mélanges.

17. Composition selon la revendication 16, **caractérisée en ce qu'**elle comprend, par rapport à la portion de matières premières vierge, entre 500 ppm et 3000 ppm d'agent de décoloration.

18. Article en verre sodo-calcique susceptible d'être fabriqué selon le procédé selon l'une quelconque des revendications 1 à 9, **caractérisé en ce qu'**il comprend un taux de fer inférieur à 190 ppm.

19. Article selon la revendication 18, **caractérisé en ce qu'**il comprend un taux de verre recyclé contenu inférieur à 50% en poids.

20. Article selon la revendication 18 ou la revendication 19, **caractérisé en ce qu'**il comprend un taux de verre recyclé PCR contenu inférieur à 40% en poids.

21. Article selon l'une quelconque des revendications 18 à 20, **caractérisé en ce qu'**il est un article en verre moulé, creux ou plein, présentant une forme simple ou complexe.

22. Article selon l'une quelconque des revendication 18 à 21, **caractérisé en ce qu'**il est un récipient présentant un col étroit tel qu'un flacon, notamment pour parfum, une bouteille, une ampoule, une carafe ou une bonbonne, ou bien un récipient présentant un col large tel qu'un pot, notamment pour produit cosmétique, ou un bocal.

23. Article selon l'une quelconque des revendications 18 à 22, **caractérisé en ce qu'**il est un bouchon ou un cabochon.

## Patentansprüche

1. Verfahren zur Herstellung eines Artikels aus Kalk-Natron-Glas aus einer Glaszusammensetzung, wobei das Verfahren umfasst:
- Einbringen der Glaszusammensetzung in einen Glasofen, wobei die Glaszusammensetzung einen Anteil an recyceltem Mineralglas und einen Anteil an neuen Rohstoffen für Mineralglas umfasst,
- Schmelzen der Glaszusammensetzung in dem Glasofen, um ein geschmolzenes Glas zu erhalten,
- Formen des geschmolzenen Glases, um den Glasartikel zu erhalten,
**dadurch gekennzeichnet, dass** der Anteil an neuen Rohstoffen für Mineralglas einen Eisengehalt von kleiner gleich 160 ppm aufweist.

2. Verfahren nach Anspruch 1, **dadurch gekennzeichnet, dass** der Anteil an mineralischem Recyclingglas Post-Consumer-Recyclingglas, Pre-Consumer-Recyclingglas oder eine Mischung davon umfasst.

3. Verfahren nach Anspruch 1 oder 2, **dadurch gekennzeichnet, dass** der Anteil an neuen Rohstoffen in der Glaszusammensetzung zwischen 30 Gew.-% und 80 Gew.-% liegt.

4. Verfahren nach einem der Ansprüche 1 bis 3, **dadurch gekennzeichnet, dass** der Anteil an mineralischem Recyclingglas in der Glaszusammensetzung zwischen 5 Gew.-% und 35 Gew.-% liegt.

5. Verfahren nach einem der Ansprüche 1 bis 4, **dadurch gekennzeichnet, dass** der in den Glasofen eingebrachte Recyclinganteil zwischen 5 Gew.-% und 35 Gew.-% liegt.

6. Verfahren nach einem der Ansprüche 1 bis 5, **dadurch gekennzeichnet, dass** die Glaszusammensetzung ferner interne Scherben umfasst.

7. Verfahren nach einem der Ansprüche 1 bis 6, **dadurch gekennzeichnet, dass** der Anteil an internen Scherben in der Glaszusammensetzung zwischen 20 Gew.-% und 50 Gew.-% liegt.

8. Verfahren nach einem der Ansprüche 1 bis 7, **dadurch gekennzeichnet, dass** die Zusammensetzung ferner ein Entfärbungsmittel umfasst, das insbesondere aus Kobaltoxid, Ceroxid, Erbiumoxid, Neodymoxid, Selenoxid und deren Mischungen gewählt ist.

9. Verfahren nach Anspruch 8, wobei die Zusammensetzung, bezogen auf den Anteil an neuen Rohstoffen, zwischen 500 ppm und 3000 ppm Entfärbungsmittel umfasst.

10. Glaszusammensetzung für die Herstellung eines Artikels aus Kalk-Natron-Glas, die einen Anteil an mineralischem Recyclingglas und einen Anteil an neuen Rohstoffen für Mineralglas umfasst, **dadurch gekennzeichnet, dass** der Anteil an neuen Rohstoffen für Mineralglas einen Eisengehalt von weniger als 160 ppm aufweist.

11. Zusammensetzung nach Anspruch 10, **dadurch gekennzeichnet, dass** der Anteil an mineralischem Recyclingglas Post-Consumer-Recyclingglas, Pre-Consumer-Recyclingglas oder eine Mischung davon umfasst.

12. Zusammensetzung nach Anspruch 10 oder 11, **dadurch gekennzeichnet, dass** der Anteil an neuen Rohstoffen in der Glaszusammensetzung zwischen 30 Gew.-% und 80 Gew.-% liegt.

13. Zusammensetzung nach einem der Ansprüche 10 bis 12, **dadurch gekennzeichnet, dass** der Anteil an mineralischem Recyclingglas in der Glaszusammensetzung zwischen 5 Gew.-% und 35 Gew.-% liegt.

14. Zusammensetzung nach einem der Ansprüche 10 bis 13, **dadurch gekennzeichnet, dass** sie ferner interne Scherben umfasst.

15. Zusammensetzung nach einem der Ansprüche 10 bis 14, **dadurch gekennzeichnet, dass** der Anteil an internen Scherben in der Glaszusammensetzung zwischen 20 Gew.-% und 50 Gew.-% liegt.

16. Zusammensetzung nach einem der Ansprüche 10 bis 15, **dadurch gekennzeichnet, dass** sie ferner ein Entfärbungsmittel umfasst, das insbesondere aus Kobaltoxid, Ceroxid, Erbiumoxid, Neodymoxid, Selenoxid und deren Mischungen gewählt ist.

17. Zusammensetzung nach Anspruch 16, **dadurch gekennzeichnet, dass** sie, bezogen auf den Anteil an neuen Rohstoffen, zwischen 500 ppm und 3000 ppm Entfärbungsmittel umfasst.

18. Gegenstand aus Kalk-Natron-Glas, der nach dem Verfahren nach einem der Ansprüche 1 bis 9 hergestellt werden kann, **dadurch gekennzeichnet, dass** er einen Eisengehalt von weniger als 190 ppm aufweist.

19. Artikel nach Anspruch 18, **dadurch gekennzeichnet, dass** er einen Anteil an recyceltem Glas von weniger als 50 Gew.-% umfasst.

20. Artikel nach Anspruch 18 oder 19, **dadurch gekennzeichnet, dass** er einen Anteil an PCR-recyceltem Glas von weniger als 40 Gew.-% umfasst.

21. Gegenstand nach einem der Ansprüche 18 bis 20, **dadurch gekennzeichnet, dass** er ein geformter, hohler oder massiver Glasgegenstand ist, der eine einfache oder komplexe Form aufweist.

22. Artikel nach einem der Ansprüche 18 bis 21, **dadurch gekennzeichnet, dass** er ein Behälter mit einem engen Hals wie ein Flakon, insbesondere für Parfüm, eine Flasche, eine Ampulle, eine Karaffe oder eine Glasflasche oder ein Behälter mit einem weiten Hals wie ein Tiegel, insbesondere für ein Kosmetikprodukt, oder ein Glasgefäß ist.

23. Artikel nach einem der Ansprüche 18 bis 22, **dadurch gekennzeichnet, dass** er ein Verschluss oder ein Cabochon ist.

## Claims

1. A method for manufacturing a soda-lime glass article from a glass batch, said method comprising:
- introducing the glass batch into a glass furnace, the glass batch comprising a portion of mineral recycled glass and a portion of virgin raw materials for mineral glass;
- melting the glass batch in the glass furnace to obtain molten glass;
- shaping the molten glass to obtain the glass article;
**characterised in that** the portion of virgin raw materials for mineral glass comprises an iron content of less than or equal to 160 ppm.

2. The method according to claim 1, **characterised in that** the portion of mineral recycled glass comprises post-consumer recycled glass, pre-consumer recycled glass, or a mixture thereof.

3. The method according to claim 1 or claim 2, **characterised in that** the proportion of virgin raw materials in the glass batch is between 30% and 80% by weight.

4. The method according to any of claims 1 to 3, **characterised in that** the proportion of mineral recycled glass in the glass batch is between 5% and 35% by weight.

5. The method according to any of claims 1 to 4, **characterised in that** the recycled content introduced into the glass furnace is between 5% and 35% by weight.

6. The method according to any of claims 1 to 5, **characterised in that** the glass batch further comprises in-house cullet.

7. The method according to any of claims 1 to 6, **characterised in that** the proportion of in-house cullet in the glass batch is between 20% and 50% by weight.

8. The method according to any one of claims 1 to 7, **characterised in that** the batch further comprises a discolouring agent, especially selected from cobalt oxide, cerium oxide, erbium oxide, neodymium oxide, selenium oxide, and mixtures thereof.

9. The method according to claim 8, wherein the batch comprises, relative to the portion of virgin raw materials, between 500 ppm and 3000 ppm of discolouring agent.

10. A glass batch for the manufacture of a soda-lime glass article comprising a portion of mineral recycled glass and a portion of virgin raw materials for mineral glass, **characterised in that** the portion of virgin raw materials for mineral glass comprises an iron content of less than 160 ppm.

11. The batch according to claim 10, **characterised in that** the portion of mineral recycled glass comprises post-consumer recycled glass, pre-consumer recycled glass, or a mixture thereof.

12. The batch according to claims 10 or 11, **characterised in that** the proportion of virgin raw materials in the glass batch is between 30% and 80% by weight.

13. The batch according to any of claims 10 to 12, **characterised in that** the proportion of mineral recycled glass in the glass batch is between 5% and 35% by weight.

14. The batch according to any of claims 10 to 13, **characterised in that** it further comprises in-house cullet.

15. The batch according to any of claims 10 to 14, **characterised in that** the proportion of in-house cullet in the glass batch is between 20% and 50% by weight.

16. The batch according to any one of claims 10 to 15, **characterised in that** it further comprises a discolouring agent, especially selected from cobalt oxide, cerium oxide, erbium oxide, neodymium oxide, selenium oxide, and mixtures thereof.

17. The batch according to claim 16, **characterised in that** it comprises, relative to the portion of virgin raw materials, between 500 ppm and 3000 ppm of discolouring agent.

18. A soda-lime glass article likely to be manufactured according to the method according to any of claims 1 to 9, **characterised in that** it comprises an iron content of less than 190 ppm.

19. The article according to claim 18, **characterised in that** it comprises a content of recycled glass of less than 50% by weight.

20. The article according to claim 18 or claim 19, **characterised in that** it comprises a content of PCR recycled glass of less than 40% by weight.

21. The article according to any of claims 18 to 20, **characterised in that** it is a moulded, hollow or solid, glass article, having a simple or complex shape.

22. The article according to any of claims 18 to 21, **characterised in that** it is a container having a narrow neck such as a flask, especially for perfume, a bottle, an ampoule, a carafe or a carboy, or else a container having a wide neck such as a pot, especially for cosmetic products, or a jar.

23. The article according to any of claims 18 to 22, **characterised in that** it is a cap or a mottling.
